# EUROPEAN PATENT SPECIFICATION

(11) **EP 2 783 541 B1**
(45) Date of publication and mention of the grant of the patent: **19.09.2018**
(21) Application number: 11785030.5
(22) Date of filing: 22.11.2011
(51) Int. Cl.: H04W 72/04, H04W 72/14, H04L 5/00, H04W 84/04, H04W 72/08

(54) **CARRIER AGGREGATION OPTIMIZATION**
TRÄGERAGGREGATIONSOPTIMIERUNG
OPTIMISATION D'AGRÉGATION DE PORTEUSE

(43) Date of publication of application: 01.10.2014
(73) Proprietor: Nokia Solutions and Networks Oy, 02610 Espoo (FI)
(72) Inventor: SZUFARSKA, Agnieszka, PL-80-299 Gdansk (PL); PEDERSEN, Klaus Ingemann, DK-9000 Aalborg (DK); KORDYBACH, Krzysztof, PL-24-100 Pulawy (PL)
(74) Representative: Nokia EPO representatives
(86) International application number: PCT/EP2011/070708
(87) International publication number: WO 2013/075738

(56) References cited:
- QUALCOMM INCORPORATED: "Carrier-based HetNet ICIC for DL interference scenario", 3GPP DRAFT; R3-113022, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20111114 - 20111118, 4 November 2011 (2011-11-04), XP050566197,
- SAMSUNG: "Carrier-based ICIC solution for Macro/Pico HetNet", 3GPP DRAFT; R3-112845(CARRIER-BASED ICIC SOLUTION FOR MACROPICO), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20111114 - 20111118, 5 November 2011 (2011-11-05), XP050566211,
- PREBEN E MOGENSEN ET AL: "LTE-Advanced: The path towards gigabit/s in wireless mobile communications", WIRELESS COMMUNICATION, VEHICULAR TECHNOLOGY, INFORMATION THEORY AND AEROSPACE&ELECTRONIC SYSTEMS TECHNOLOGY, 2009. WIRELESS VITAE 2009. 1ST INTERNATIONAL CONFERENCE ON, IEEE, PISCATAWAY, NJ, USA, 17 May 2009 (2009-05-17), pages 147-151, XP031495841, ISBN: 978-1-4244-4066-5
- "LTE; Evolved Universal Terrestrial Radio Access Network (E-UTRAN); X2 Application Protocol (X2AP) (3GPP TS 36.423 version 10.3.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V10.3.0, 1 October 2011 (2011-10-01), XP014068388, cited in the application

## Description

### Field of the invention

The present invention relates to methods, apparatuses and a program for carrier aggregation optimization.

In particular, the present invention relates to carrier based inter-cell interference coordination (CB-ICIC) and on how to use such mechanisms for optimization of carrier aggregation operation from a systems performance point of view.

One of a plurality of possible use cases in which the concepts are considered is heterogeneous network deployment with nodes of different classes (different transmit power values and coverage areas, e.g. macro and pico) being deployed in the same geographical area.

### Background of the invention

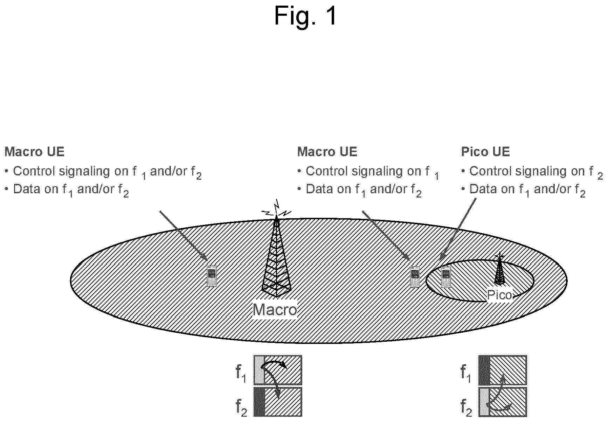

Fig. 1 is a simple illustration of a scenario with carrier aggregation of two carriers on macro and pico. In Fig. 1, there are shown two eNBs (macro and pico) and two enabled carriers f1 and f2. Carrier aggregation (CA) is assumed such that UEs supporting CA are capable of being scheduled simultaneously from two carriers on the same eNB, if configured for such operation. UEs not supporting CA (e.g. legacy Rel-8 and Rel-9 UEs) are only schedulable on a single carrier. For the case illustrated in Fig. 1 there can be non-negligible interference between the macro and pico eNBs due to overlapping coverage, and therefore it is foreseen that introducing full, or partial, resource partitioning between the two eNBs would be beneficial. In the example shown in Fig. 1, it is assumed that the resource partitioning is implemented in the frequency domain on a carrier resolution, i.e. in line with the overall CB-ICIC principles.

As a basis for the further discussion and in order to illustrate the problem underlying the present invention, in the following, the basics of LTE Rel-10 CA terminology that will be used in the subsequent description are summarized.

For each user, a component carrier (CC) is defined as its Primary cell (PCell). Different users may not necessarily use the same CC as their PCell.

The PCell can be regarded as the anchor carrier for the terminal and is thus used for basic functionalities such as radio link failure monitoring, mobility measurements, etc. If more than one CC is configured for a user supporting CA, the additional CCs are denoted as Secondary Cells (SCells) for the user.

Configured SCells are by default de-activated, so they have to be explicitly activated before being schedulable. However, the PCell for a user is always assumed to be activated and is therefore not subject to any deactivation procedures.

For users in CA mode, the eNB can send a scheduling grant on one CC for scheduling the user on another CC. The latter is referred to as cross-CC scheduling as the scheduling grant and the corresponding data transmission takes place on different CCs. The cross-CC scheduling functionality is incorporated by appending a so-called carrier indicator field (CIF) to the downlink control information (DCI). The DCI is used to indicate the user allocations for uplink and downlink traffic, and the CIF is used to address which CC the user data is transmitted on. When the CIF is appended to the DCI, the payload size increases slightly, and as the radio resources for the transmission of the data is constant, the link performance is slightly worse due to weaker coding. The cross-CC scheduling functionality offers additional system flexibility for further optimizing control and data channel performance across multiple CCs. It is noted that only scheduling on SCell is possible via cross-CC scheduling, i.e. scheduling of data on PCell always happens via scheduling grants send on the PCell.

In view of the above definitions, the following observations related to CB-ICIC for CA optimization are made:
Referring to Fig. 1, it would be desirable to have the users on macro and pico use different carriers as PCell for their users. However, this is not always possible, since users operating on one carrier will only have PCell, and congestion may therefore likely occur for some cases if all users on an eNB use the same carrier as PCell.

The SCell can be quickly de-activated with MAC signaling, such that interference can be reduced. Even if a user has no SCell, it can still have service on the PCell.

For the cases with two carriers as illustrated in Fig. 1, cross-CC scheduling can only take place from the carrier configured as the users PCell, since the user can only have one SCell (if there are two carriers). This means that if the objective is to reduce interference from the control signaling, use of cross scheduling can only help to reduce interference generated on the user's SCell (i.e. control info such as PDCCH is send from PCell).

So far, inter-eNB information exchange for CA optimization has not been extensively discussed, and no solutions are captured in the current LTE Rel-10 specifications. However, the current LTE specifications do include a number of X2 messages that, among others, include exchange of load measures between eNBs. Examples of such load measures from 3GPP TS 36.423 include the following:
For example, load is reported as physical resource blocks PRBs allocated for GBR (guaranteed bit-rate), non-GBR and all services, separately for uplink UL and downlink DL (see table below with summary of load measures).

Further, there is Load information procedure, which enables to inform a neighbour that one or more cells suffers higher UL interference (overload indicator), even with pointing to particular PRBs.

A definition of the load measures in Radio Resource Status information element IE is currently as follows (see section 9.2.37 in TS 36.423).

| **IE/Group Name** | **Presence** | **Range** | **IE type and reference** | **Semantics description** |
|---|---|---|---|---|
| DL GBR PRB usage | M | | INTEGER (0..100) | |
| UL GBR PRB usage | M | | INTEGER (0..100) | |
| DL non-GBR PRB usage | M | | INTEGER (0..100) | |
| UL non-GBR PRB usage | M | | INTEGER (0..100) | |
| DL Total PRB usage | M | | INTEGER (0..100) | |
| UL Total PRB usage | M | | INTEGER (0..100) | |

However, it is noted that those existing load measures / procedures to not include explicit knowledge on CA operation.

Qualcomm Inc. "Carrier based HetNet ICIC for DL interference scenario", 3GPP Draft, R3-113022, 3rd Generation Partnership Project (3GPP) 4 November 2001 presents mechanisms for assisting interference mitigation in downlink. The proposed method comprises a pico cell (or generally a low power node) receiving a Load Indication from a macro cell for all available carriers. The pico cell then uses this information to identify the best allocation of PCell/SCell for the UEs, and schedules the PCell/SCell configuration accordingly.

Samsung "Carrier-based ICIC solution for Macro/Pico HetNet", 3GPP Draft, R3-112845. 3rd Generation Partnership Project (3GPP) 5 November 2001 presents information to be used in cross-carrier scheduling for downlink interference. The solution proposed comprises candidate primary component carriers (PCCs) for a macro cell being configured by the macro cell and transmitted to a pico cell. The pico cell may then assign a PCC to a UE which has a different carrier frequency to the candidate PCC carrier frequency in the macro cell.

Mogensen et. al. (2009) "LTE-Advanced: The Path towards Gigabit/s in Wireless Mobile Communications", 1st International Conference on Wireless Communication, Vehicular Technology, Information Theory and Aerospace & Electronic Systems Technology, 17 May 2009 provides various technology components identified by 3GPP for LTE-Advanced. In part F, Local area optimization features are discussed. A plurality of eNBs are provided, each of which select a primary component carrier (PCC) and a plurality of secondary component carriers. When a new eNB is activated, the new eNB receives the PCC/SCC configurations from neighboring eNBs and selects a PCC and SCCs in dependence on the received configurations.

### Summary of the Invention

In view of the above, an object of the present invention is to introduce supporting mechanisms to allow CB-ICIC for CA optimization. Another object of the present invention is to enable exchange of information between eNBs, which will be useful for implementing CB-ICIC for CA optimization purposes.

According to the present invention, there are provided methods, apparatuses and a computer program product for carrier aggregation optimization.

According to an aspect of the invention there is provided a method, comprising:
receiving, at a base station, information from another base station regarding usage of primary cell, PCell, and secondary cell, SCell, per carrier at the another base station;
receiving, at the base station, information from the another base station that channel interference on a specific carrier occurs;
analyzing, at the base station, the received information,
configuring, at the base station, PCells and SCells for user equipment served by the base station based on the analysis of the received information to reduce data transmission on the specific carrier.

According to further refinements of the invention as defined under the above aspects
- the usage of PCell and SCell per carrier is defined as number of configured users with PCell and SCell on the carrier;
- the usage of PCell and SCell per carrier is defined as percentage of used physical resource blocks for PCell and SCell on the carrier.

According to another aspect of the invention there is provided a method, comprising:
transmitting, to another base station, information regarding usage of primary cell, PCell, and secondary cell, SCell, per carrier at a base station;
determining, at the base station, whether channel interference from another base station on a specific carrier occurs; and
if it is determined that channel interference on the specific carrier occurs, informing the another base station about occurrence of the channel interference on the specific carrier.

According to further refinements of the invention as defined under the above aspects
- reducing data transmission comprises reducing the number of users using the specific carrier;
- reducing data transmission comprises reducing transmission power on the specific carrier;
- the method further comprises sending an acknowledgement to the another base station, that data transmission on the specific carrier will be reduced;
- the channel is a data channel;
- the channel is a control channel.

According to another aspect of the invention there is provided a base station, comprising:
a receiving unit configured to receive information from another base station regarding usage of primary cell, PCell, and secondary cell, SCell, per carrier at the another base station, the receiving unit further configured to receive information from the another base station that channel interference on a specific carrier occurs;
an analyzing unit configured to analyze the received information; and
a configuring unit adapted to configure PCells and SCells for user equipment served by the base station based on the analysis of the received information to reduce data transmission on the specific carrier.

According to further refinements of the invention as defined under the above aspects
- the usage of PCell and SCell per carrier is defined as number of configured users with PCell and SCell on the carrier;
- the usage of PCell and SCell per carrier is defined as percentage of used physical resource blocks for PCell and SCell on the carrier.

According to another aspect of the invention there is provided a base station, comprising:
a transmitting unit configured to transmit, to another base station, information regarding usage of primary cell, PCell, and secondary cell, SCell, per carrier at the base station;
a determining unit configured to determine whether channel interference from another base station on a specific carrier occurs; and
an informing unit configured to inform, if it is determined that channel interference on the specific carrier occurs, the another base station about occurrence of the channel interference on the specific carrier.

According to further refinements of the invention as defined under the above aspects
- the reducing unit is configured to reduce the number of users using the specific carrier;
- the reducing unit is configured to reduce transmission power on the specific carrier;
- the base station further comprises a sending unit configured to send an acknowledgement to the another base station, that data transmission on the specific carrier will be reduced;
- the channel is a data channel;
- the channel is a control channel.

According to another aspect of the present invention there is provided a computer program product comprising code means adapted to produce steps of any of the methods as described above when loaded into the memory of a computer.

According to a still further aspect of the invention there is provided a computer program product as defined above, wherein the computer program product comprises a computer-readable medium on which the software code portions are stored.

According to a still further aspect of the invention there is provided a computer program product as defined above, wherein the program is directly loadable into an internal memory of the processing device.

### Brief Description of the Drawings

These and other objects, features, details and advantages will become more apparent from the following detailed description of embodiments of the present invention which is to be taken in conjunction with the appended drawings, in which:
Fig. 1 is a diagram illustrating a scenario with carrier aggregation of two carriers on macro and pico according to an embodiment of the present invention;
Fig. 2 is a signaling diagram illustrating an exchange of new PCell/SCell load measure according to an embodiment of the present invention;
Fig. 3 is a signaling diagram illustrating a method for signaling interference problems for data channel on a specific carrier according to an embodiment of the present invention;
Fig. 4 is a signaling diagram illustrating another method for signaling interference problems for control channels on carrier x according to an embodiment of the present invention;
Fig. 5 is a block diagram illustrating an example of a base station according to an embodiment of the present invention;
Fig. 6 is a flowchart illustrating processing of the base station according to an embodiment of the present invention.
Fig. 7 is a block diagram showing a base station according to certain embodiments of the present invention.
Fig. 8 is a flowchart illustrating processing of the base station according to certain embodiments of the present invention.
Fig. 9 is a block diagram showing a base station according to certain embodiments of the present invention.
Fig. 10 is a flowchart illustrating processing of the base station according to certain embodiments of the present invention.

### Detailed Description

In the following, embodiments of the present invention are described by referring to general and specific examples of the embodiments. It is to be understood, however, that the description is given by way of example only, and that the described embodiments are by no means to be understood as limiting the present invention thereto.

According to certain embodiments of the present invention, there is proposed an information exchange as outlined in the following. The information exchange is to be implemented within standardized signaling procedures or by extending these.

When an eNB has to decide on how to assign PCell and SCell for its users, it would be useful to first obtain a priori knowledge of how neighbouring cells have configured PCell and SCell for its users. Considering the example case with two carriers shown in Fig. 1, and if it is known that neighbouring cells mainly use carrier 1 for PCell, then it would make the most sense for the eNB to use carrier 2 for PCell of its users.

Thus, according to an embodiment of the resent invention, a proposal for relevant signaling is therefore to introduce a load measure that captures information on PCell and SCell usage per carrier. For the sake of simplicity, it is called PCell/SCell carrier load in the following.

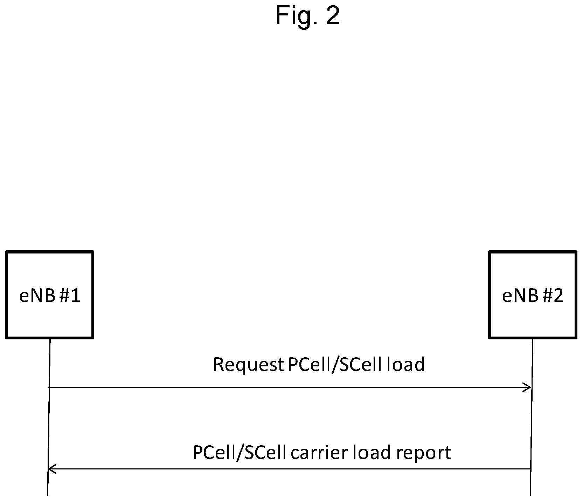

Fig. 2 is a signaling diagram illustrating an example of an exchange of new PCell/SCell load measure according to an embodiment of the present invention. As shown in Fig. 2, eNB#1 requests eNB#2 to report its PCell/SCell carrier load and eNB#2 sends a PCell/SCell carrier load report to eNB#1.

Having such a PCell/SCell carrier load report from neighboring eNBs will be useful a priori information for an eNB to decide on how it best configures PCell and SCell for its users.

It is noted that the proposed PCell/SCell carrier load measure can be seen as an extension of existing load measures in 3GPP TS36.423, as mentioned above, and may make use of existing X2 procedures.

A further proposal for new information to facilitate CB-ICIC for CA optimization is motivated by the fact that an eNB should be able to inform its neighbors if it has problems with reliable downlink data channel transmission on carrier number X.

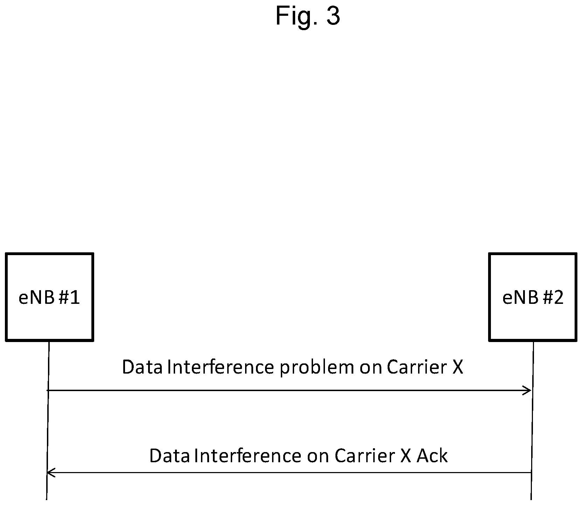

In this regard, reference is made to Fig. 3, which is a signaling diagram illustrating a method for signaling interference problems for data channel on a specific carrier according to an embodiment of the present invention.

In the example shown in Fig. 3, eNB #1 has detected that it has problems with reliable data channel performance on carrier X due to interference from neighboring eNB #2. Therefore, eNB #1 informs eNB #2 that it has detected "Data interference problem on carrier X".

Assuming that eNB #2 is able to help to improve the situation by reducing its transmission on carrier X, it responses to eNB #1 with "Data interference on carrier X Ack" in order to acknowledge that it has taken actions to improve the situation.

However, it is noted that such an acknowledgement is not mandatory. Alternatively, the eNB #1 gets to know that the neighbor took actions just by observing reduced interference.

Such actions for improving the situation may be (but are not limited to) for eNB #2 to reduce the number of users using carrier X (e.g. by de-activating SCells on carrier X), reduce the transmission power on carrier X, etc. If eNB #2 for some reasons is not able to take actions for reducing the interference on carrier X, it responses with "Data interference on carrier X Nack" as a negative acknowledgement (or, if ACK/NACK message is not included in the standard, the eNB #1 will observe/measure no reduction in interference).

The proposed "Data interference problem on carrier X" information could furthermore be extended from a single binary message to include higher level of granularity to indicate the criticality of the data channel interference problems on carrier X.

In this regard, it is proposed that a part of the "Data interference problem on carrier X" message could include the number of users having carrier X configured as its PCell, or some other load measure of PCell load on the carrier.

Having obtained PCell/SCell information about eNB #1 allocations, this will be useful information for eNB #2 to determine how important it is for the eNB#2 to reduce the interference it generates on carrier X. As an example, if eNB #1 signals "Data interference problem on carrier X" with many users having carrier X as PCell, then it is clearly more important for eNB #2 to take appropriate actions, as compared to cases where zero (when it's just used as SCell), or only few users, have carrier X as PCell.

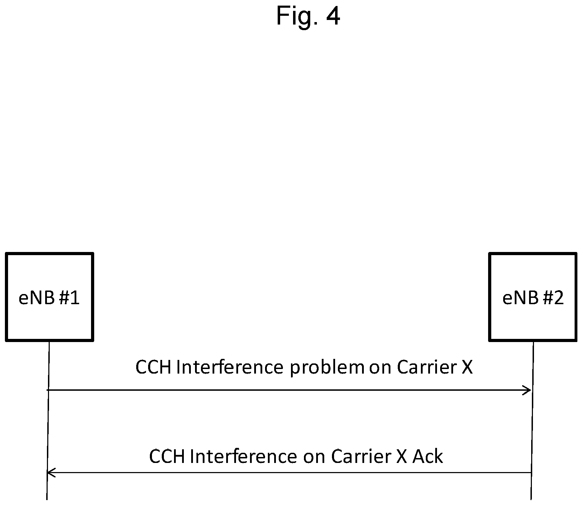

Fig. 4 is a signaling diagram illustrating another method for signaling interference problems for control channels on a specific carrier according to an embodiment of the present invention.

The signaling procedure summarized in Fig. 4 is proposed for handling control channel (CCH) interference problems in a similar way as described above. In this context, CCH refers to the MAC / PHY layer signaling transmitted in the first 1-3 symbols in every TTI (transmission time interval) as also illustrated in Fig. 1. Examples of CCH's include, for example, the PDCCH (among others).

As shown in Fig. 4, eNB #1 has detected that it has problems with reliable CCH performance on carrier X due to interference from neighboring eNB #2. Therefore, eNB #1 informs eNB #2 that it has detected "CCH interference problem on carrier X".

Assuming that eNB #2 is able to help improve the situation, it responses to eNB #1 with "CCH interference on carrier X Ack" in order to acknowledge that it has taken actions to improve the situation.

However, it is again noted that such an acknowledgement is not mandatory and that the eNB #1 is able to recognize that the neighbor took appropriate actions just by observing reduced interference.

The actions that eNB #2 can take to reduce the interference it creates for eNB #1 CCHs is basically to reduce its on transmitted energy for the CCH region on carrier X. This is for example possible by starting to use cross-carrier scheduling for carrier X, such that PDCCH scheduling grants for carrier X are send from other carriers. Thus, when eNB #2 receives the "CCH interference problem on carrier X" message, it can be regarded as hint to starting to use cross-carrier scheduling to help improve CCH performance in other cells.

In summary, the present invention can be exemplified as a couple of new X2 signaling messages / procedures or message modifications as follows:
According to a first aspect, a new PCell/SCell carrier load message is created, which basically includes a PCell and SCell load on the carrier.

Further, there is a new message for informing neighboring eNB that it has detected downlink data channel interference problems on a certain carrier.

Still further, there is a new message for informing neighboring eNB that it has detected control channel interference problems on a certain carrier.

In general all of the above messages are a step towards cognitive network concept. Thus, the new proposals for X2 messages are beneficial for CA optimization and ICIC.

In the following, examples for implementing the above mentioned solutions are described according to an aspect of the present invention.

Since according to the present invention, new X2 messages / procedures are proposed, it is necessary that those become part of 3GPP TS 36.423 at some point. According to one example, the new X2 messages could be defined as new information elements (IE) for existing messages (e.g. being defined as new IEs for existing LOAD messages).

Secondly, for the examples illustrated in Figs. 3 and 4, there is still room for vendor specific implementations on which actions eNB #2 takes if receiving messages indicating interference problems.

The proposed PCell/SCell load can be defined in numerous different ways. In the following, there are described only some examples, and the definition is not to be limited to these examples.

For example, it can be defined as the number of configured users with PCell / SCell on the carrier, respectively.

As a further example, it can be defined as the percentage of used PRBs for PCell and SCell on the carrier, respectively. By using this definition, the load measure becomes a simple extension of the existing load measures in 3GPP TS 36.423, where percentage of used PRBs are defined for GBR and non-GBR. Hence, it is proposed to also have this defined per PCell and SCell, respectively.

Thus, the exchange of PCell / SCell carrier load could be implemented by using simple extensions of existing X2 procedures. For example, via use of modified "resource status report initiation" and "resource status report" procedures to convey PCell / SCell carrier load.

Similarly, the signaling of the downlink "Data interference problem on carrier X" can also be implemented via minor modifications and/or extensions of existing X2 signaling. As mentioned, the "Data interference problem on carrier X" is a re-active interference management mechanism to indicate interference problems on the downlink for carrier X.

Existing X2 specifications include a somehow related reactive mechanism for the uplink, called Overload Indication - OI (TS 36.423). The OI is defined per PRB, while what is proposed according to the present invention for the downlink, "Data interference problem on carrier X", is per carrier.

However, despite this minor difference, the X2 signaling of "Data interference problem on carrier X" could be implemented similar as the OI, or as a simple extension of the OI message to also include "Data interference problem on carrier X" information.

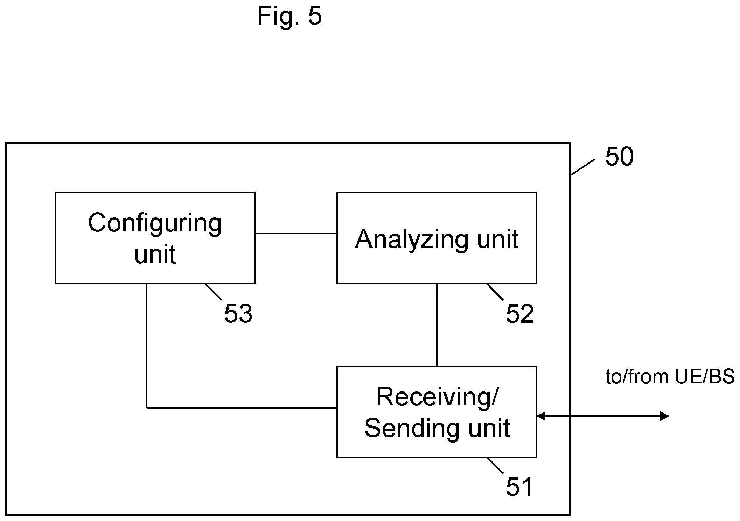

Fig. 5 is a block diagram showing a base station according to certain embodiments of the present invention.

As shown in Fig. 5, according to an embodiment of the present invention, the base station 50 comprises a receiving/sending unit 51 configured to receive information from another base station regarding usage of PCell and SCell per carrier at the another base station. Further, the base station 50 comprises an analyzing unit 52 configured to analyze the received information and a configuring unit 53 configured to configure PCells and SCells for user equipment served by the base station based on the analysis of the received information.

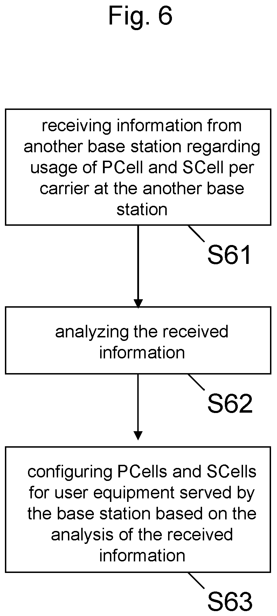

Fig. 6 is a flowchart illustrating processing of the base station according to certain embodiments of the present invention.

According to an embodiment of the present invention, first, in a step S61, the base station receives information from another base station regarding usage of PCell and SCell per carrier at the another base station. Then, in a step S62, the base station analyzes the received information, and configures, in a step S63, PCells and SCells for user equipment served by the base station based on the analysis of the received information.

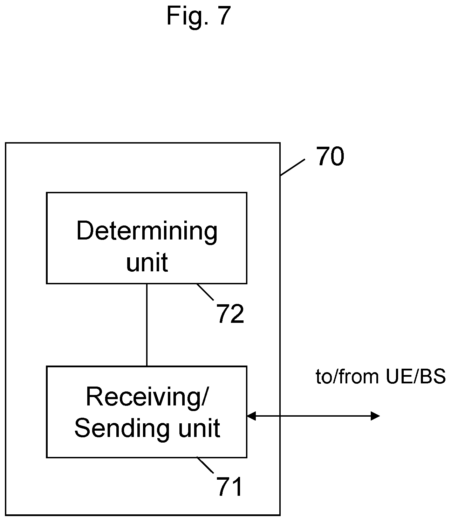

Fig. 7 is a block diagram showing a base station according to certain embodiments of the present invention.

As shown in Fig. 7, according to an embodiment of the present invention, the base station 70 comprises a determining unit 72 configured to determine whether channel interference from another base station on a specific carrier occurs, and a sending/receiving unit 71 serving as a informing unit configured to inform, if it is determined that channel interference on the specific carrier occurs, the another base station about occurrence of the channel interference on the specific carrier.

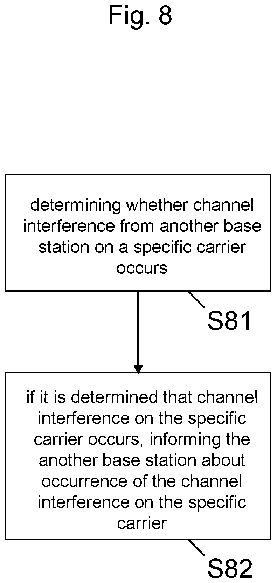

Fig. 8 is a flowchart illustrating processing of the base station according to certain embodiments of the present invention.

According to an embodiment of the present invention, first, in a step S81, the base station determines whether channel interference from another base station on a specific carrier occurs, and if it is determined that channel interference on the specific carrier occurs, the base station informs the another base station about occurrence of the channel interference on the specific carrier in a step S82.

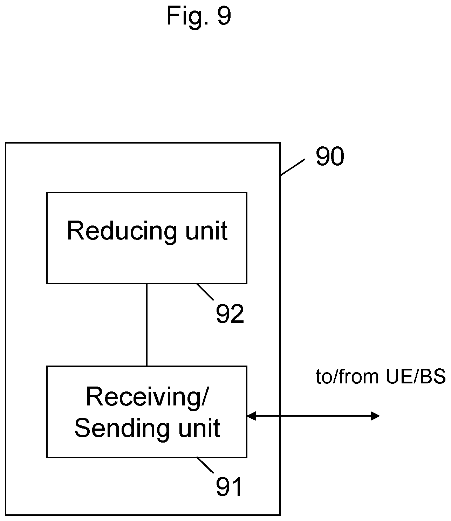

Fig. 9 is a block diagram showing a base station according to certain embodiments of the present invention.

As shown in Fig. 9, according to an embodiment of the present invention, the base station 90 comprises a receiving/sending unit 71 configured to receive information from another base station, that channel interference on a specific carrier occurs. Further, the base station 90 comprises a reducing unit 92 configured to reduce data transmission on the specific carrier.

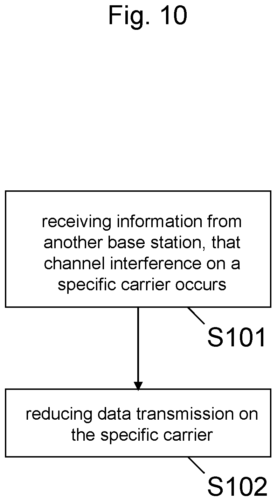

Fig. 10 is a flowchart illustrating processing of the base station according to certain embodiments of the present invention.

According to an embodiment of the present invention, first, in a step S101, the base station receives information from another base station, that channel interference on a specific carrier occurs. Then, in a step S102, the base station reduces data transmission on the specific carrier.

In the foregoing exemplary description of the base station, only the units that are relevant for understanding the principles of the invention have been described using functional blocks. The base station may comprise further units that are necessary for its respective operation. However, a description of these units is omitted in this specification. The arrangement of the functional blocks of the devices is not construed to limit the invention, and the functions may be performed by one block or further split into sub-blocks.

For the purpose of the present invention as described herein above, it should be noted that
- method steps likely to be implemented as software code portions and being run using a processor at a, base station or entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined base station, or any one of their respective units/means) can be implemented as individual devices, units or means, but this does not exclude that they are implemented in a distributed fashion throughout the system, as long as the functionality of the device, unit or means is preserved;
- an apparatus like the entity or base station may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

It is noted that the embodiments and general and specific examples described above are provided for illustrative purposes only and are in no way intended that the present invention is restricted thereto. Rather, it is the intention that all variations and modifications which fall within the scope of the appended claims are covered.

## Claims

1. A method, comprising:
receiving, at a base station, information from another base station regarding usage of primary cell, PCell, and secondary cell, SCell, per carrier at the another base station;
receiving, at the base station, information from the another base station that channel interference on a specific carrier occurs;
analyzing, at the base station, the received information; and
configuring, at the base station, PCells and SCells for user equipment served by the base station based on the analysis of the received information to reduce data transmission on the specific carrier.

2. The method according to claim 1, wherein
the usage of PCell and SCell per carrier is defined as number of configured users with PCell and SCell on the carrier; or
the usage of PCell and SCell per carrier is defined as percentage of used physical resource blocks for PCell and SCell on the carrier.

3. A method, comprising:
transmitting, to another base station, information regarding usage of primary cell, PCell, and secondary cell, SCell, per carrier at a base station;
determining, at the base station, whether channel interference from the another base station on a specific carrier occurs; and
if it is determined that channel interference on the specific carrier occurs, informing the another base station about occurrence of the channel interference on the specific carrier.

4. The method according to claim 1, wherein
reducing data transmission comprises reducing the number of users using the specific carrier; and/or
reducing data transmission comprises reducing transmission power on the specific carrier; and/or
further comprising
sending an acknowledgement to the another base station, that data transmission on the specific carrier will be reduced.

5. The method according to any previous claim, wherein
the channel is a data channel, or
the channel is a control channel.

6. A base station, comprising:
a receiving unit configured to receive information from another base station regarding usage of primary cell, PCell, and secondary cell, SCell, per carrier at the another base station, the receiving unit further configured to receive information from the another base station that channel interference on a specific carrier occurs;
an analyzing unit configured to analyze the received information;
and a configuring unit adapted to configure PCells and SCells for user equipment served by the base station based on the analysis of the received information to reduce data transmission on the specific carrier.

7. The base station according to claim 6, wherein
the usage of PCell and SCell per carrier is defined as number of configured users with PCell and SCell on the carrier; or
the usage of PCell and SCell per carrier is defined as percentage of used physical resource blocks for PCell and SCell on the carrier.

8. A base station, comprising:
a transmitting unit configured to transmit, to another base station, information regarding usage of primary cell, PCell, and secondary cell, SCell, per carrier at the base station;
a determining unit configured to determine whether channel interference from the another base station on a specific carrier occurs; and
an informing unit configured to inform, if it is determined that channel interference on the specific carrier occurs, the another base station about occurrence of the channel interference on the specific carrier.

9. The base station according to any of claims 6 or 7, wherein
the reducing unit is configured to reduce the number of users using the specific carrier; and /or
the reducing unit is configured to reduce transmission power on the specific carrier; and/or
further comprising
a sending unit configured to send an acknowledgement to the another base station, that data transmission on the specific carrier will be reduced.

10. The base station according to any one of claims 6 to 9, wherein
the channel is a data channel; or
the channel is a control channel.

11. A computer program product including a program for a processing device, comprising software code portions for performing the steps of any one of claims 1 to 5 when the program is run on the processing device.

12. The computer program product according to claim 11, wherein the computer program product comprises a computer-readable medium on which the software code portions are stored.

13. The computer program product according to claim 11, wherein the program is directly loadable into an internal memory of the processing device.

## Patentansprüche

1. Verfahren, das umfasst:
das Empfangen, an einer Basisstation, von Informationen von einer anderen Basisstation hinsichtlich der Nutzung primärer Zelle PCell und sekundärer Zelle SCell pro Träger an der anderen Basisstation;
das Empfangen, an der Basisstation, von Informationen von der anderen Basisstation, dass Kanalinterferenz auf einem bestimmten Träger auftritt;
das Analysieren, an der Basisstation, der empfangenen Informationen; und
das Konfigurieren, an der Basisstation, von PCells und SCells für ein durch die Basisstation bedientes Teilnehmergerät auf Grundlage der Analyse der empfangenen Informationen zum Reduzieren von Datenübertragung auf dem bestimmten Träger.

2. Verfahren nach Anspruch 1, wobei
die Nutzung von PCell und SCell pro Träger als Anzahl konfigurierter Nutzer mit PCell und SCell auf dem Träger definiert ist; oder
die Nutzung von PCell und SCell pro Träger als Prozentsatz verwendeter physikalischer Ressourcen-Blöcke für PCell und SCell auf dem Träger definiert ist.

3. Verfahren, das umfasst:
das Übertragen, an eine andere Basisstation, von Informationen hinsichtlich der Nutzung primärer Zelle PCell und sekundärer Zelle SCell pro Träger an einer Basisstation;
das Bestimmen, an der Basisstation, ob Kanalinterferenz von der anderen Basisstation auf einem bestimmten Träger auftritt; und
falls bestimmt wird, dass Kanalinterferenz auf dem bestimmten Träger auftritt, das Informieren der anderen Basisstation über das Auftreten der Kanalinterferenz auf dem bestimmten Träger.

4. Verfahren nach Anspruch 1, wobei
das Reduzieren von Datenübertragung das Verringern der Anzahl von den bestimmten Träger nutzenden Nutzern umfasst; und/oder
das Reduzieren von Datenübertragung das Verringern der Übertragungsleistung auf dem bestimmten Träger umfasst; und/oder
ferner aufweisend
das Senden einer Bestätigung an die andere Basisstation, dass Datenübertragung auf dem bestimmten Träger reduziert wird.

5. Verfahren nach einem der vorhergehenden Ansprüche, wobei
der Kanal ein Datenkanal ist oder
der Kanal ein Steuerkanal ist.

6. Basisstation, die aufweist:
eine Empfangseinheit, die dazu ausgebildet ist, von einer anderen Basisstation Informationen hinsichtlich der Nutzung primärer Zelle PCell und sekundärer Zelle SCell pro Träger an der anderen Basisstation zu empfangen, wobei die Empfangseinheit ferner dazu ausgebildet ist, Informationen von der anderen Basisstation, dass Kanalinterferenz auf einem bestimmten Träger auftritt, zu empfangen;
eine Analyseeinheit, die dazu ausgebildet ist, die empfangenen Informationen zu analysieren;
und eine Konfigurationseinheit, die dazu ausgebildet ist, PCells und SCells für ein durch die Basisstation bedientes Teilnehmergerät auf Grundlage der Analyse der empfangenen Informationen zum Reduzieren von Datenübertragung auf dem bestimmten Träger zu konfigurieren.

7. Basisstation nach Anspruch 6, wobei
die Nutzung von PCell und SCell pro Träger als Anzahl konfigurierter Nutzer mit PCell und SCell auf dem Träger definiert ist; oder
die Nutzung von PCell und SCell pro Träger als Prozentsatz verwendeter physikalischer Ressourcen-Blöcke für PCell und SCell auf dem Träger definiert ist.

8. Basisstation, die aufweist:
eine Übertragungseinheit, die dazu ausgebildet ist, an eine andere Basisstation Informationen hinsichtlich der Nutzung primärer Zelle PCell und sekundärer Zelle SCell pro Träger an der Basisstation zu übertragen;
eine Bestimmungseinheit, die dazu ausgebildet ist, zu bestimmen, ob Kanalinterferenz von der anderen Basisstation auf einem bestimmten Träger auftritt; und
eine Informierungseinheit, die dazu ausgebildet ist, falls bestimmt wird, dass Kanalinterferenz auf dem bestimmten Träger auftritt, die andere Basisstation über das Auftreten der Kanalinterferenz auf dem bestimmten Träger zu informieren.

9. Basisstation nach einem der Ansprüche 6 oder 7, wobei
die Reduzierungseinheit dazu ausgebildet ist, die Anzahl von den bestimmten Träger nutzenden Nutzern zu verringern; und/oder
die Reduzierungseinheit dazu ausgebildet ist, Übertragungsleistung auf dem bestimmten Träger zu verringern; und/oder
ferner aufweisend
eine Sendeeinheit, die dazu ausgebildet ist, eine Bestätigung an die andere Basisstation zu senden, dass Datenübertragung auf dem bestimmten Träger reduziert wird.

10. Basisstation nach einem der Ansprüche 6 bis 9, wobei
der Kanal ein Datenkanal ist; oder
der Kanal ein Steuerkanal ist.

11. Computerprogrammprodukt, das ein Programm für eine Verarbeitungsvorrichtung umfasst, das Software-Codeteile zum Ausführen der Schritte eines der Ansprüche 1 bis 5, wenn das Programm auf der Verarbeitungsvorrichtung abläuft, aufweist.

12. Computerprogrammprodukt nach Anspruch 11, wobei das Computerprogrammprodukt ein computerlesbares Medium umfasst, auf dem die Software-Codeteile gespeichert sind.

13. Computerprogrammprodukt nach Anspruch 11, wobei das Programm in einen internen Speicher der Verarbeitungsvorrichtung direkt ladbar ist.

## Revendications

1. Procédé, comprenant les étapes suivantes :
recevoir, au niveau d'une station de base, des informations en provenance d'une autre station de base concernant l'utilisation de la cellule primaire, PCell, et de la cellule secondaire, SCell, par porteuse, au niveau de l'autre station de base ;
recevoir, au niveau de la station de base, des informations provenant de l'autre station de base indiquant que des interférences de canal se produisent sur une porteuse spécifique ;
analyser, au niveau de la station de base, les informations reçues ; et
configurer, au niveau de la station de base, des cellules PCell et SCell pour l'équipement utilisateur desservi par la station de base, sur la base de l'analyse des informations reçues afin de réduire la transmission de données sur la porteuse spécifique.

2. Procédé selon la revendication 1, dans lequel :
l'utilisation des cellules PCell et SCell par porteuse est définie sous la forme d'un nombre d'utilisateurs configurés avec les cellules PCell et SCell sur la porteuse ; ou
l'utilisation des cellules PCell et SCell par porteuse est définie sous la forme d'un pourcentage de blocs de ressources physiques utilisés pour les cellules PCell et SCell sur la porteuse.

3. Procédé comprenant les étapes suivantes :
transmettre, à une autre station de base, des informations concernant l'utilisation de la cellule primaire, PCell, et de la cellule secondaire, SCell, par porteuse à une station de base ;
déterminer, au niveau de la station de base, si des interférences de canal provenant de l'autre station de base se produisent sur une porteuse spécifique ; et
s'il est déterminé que des interférences de canal se produisent sur la porteuse spécifique, informer l'autre station de base de la survenue des interférences de canal sur la porteuse spécifique.

4. Procédé selon la revendication 1, dans lequel
réduire la transmission des données comprend de réduire le nombre d'utilisateurs utilisant la porteuse spécifique ; et/ou
réduire la transmission des données comprend de réduire la puissance de transmission sur la porteuse spécifique ; et/ou
comprenant en outre
d'envoyer un accusé de réception à l'autre station de base indiquant que la transmission des données sur la porteuse spécifique sera réduite.

5. Procédé selon l'une quelconque des revendications précédentes, dans lequel
le canal est un canal de données, ou
le canal est un canal de contrôle.

6. Station de base, comprenant :
une unité de réception configurée pour recevoir des informations en provenance d'une autre station de base concernant l'utilisation de la cellule primaire, PCell, et de la cellule secondaire, SCell, par porteuse, au niveau de l'autre station de base, l'unité de réception étant en outre configurée pour recevoir des informations provenant de l'autre station de base indiquant que des interférences de canal se produisent sur une porteuse spécifique ;
une unité d'analyse configurée pour analyser les informations reçues ;
et une unité de configuration adaptée pour configurer des cellules PCell et SCell pour l'équipement utilisateur desservi par la station de base, sur la base de l'analyse des informations reçues afin de réduire la transmission de données sur la porteuse spécifique.

7. Station de base selon la revendication 6, dans laquelle
l'utilisation des cellules PCell et SCell par porteuse est définie sous la forme d'un nombre d'utilisateurs configurés avec les cellules PCell et SCell sur la porteuse ; ou
l'utilisation des cellules PCell et SCell par porteuse est définie sous la forme d'un pourcentage de blocs de ressources physiques utilisés pour les cellules PCell et SCell sur la porteuse.

8. Station de base, comprenant :
une unité émettrice configurée pour transmettre, à une autre station de base, des informations concernant l'utilisation de la cellule primaire, PCell, et de la cellule secondaire, SCell, par porteuse à une station de base ;
une unité de détermination configurée pour déterminer si des interférences de canal provenant de l'autre station de base se produisent sur une porteuse spécifique ; et
une unité d'information configurée pour informer, s'il est déterminé que des interférences de canal se produisent sur la porteuse spécifique, l'autre station de base de la survenue des interférences de canal sur la porteuse spécifique.

9. Station de base selon l'une quelconque des revendications 6 ou 7, dans laquelle
l'unité de réduction est configurée pour réduire le nombre d'utilisateurs utilisant la porteuse spécifique ; et/ou
l'unité de réduction est configurée pour réduire la puissance de transmission sur la porteuse spécifique ; et/ou
comprenant en outre
une unité d'envoi configurée pour envoyer un accusé de réception à l'autre station de base indiquant que la transmission des données sur la porteuse spécifique sera réduite.

10. Station de base selon l'une quelconque des revendications 6 à 9, dans laquelle
le canal est un canal de données ; ou
le canal est un canal de contrôle.

11. Produit programme informatique comprenant un programme pour un dispositif de traitement, comprenant des parties de code logiciel pour exécuter les étapes de l'une quelconque des revendications 1 à 5 lorsque le programme est exécuté sur le dispositif de traitement.

12. Produit programme informatique selon la revendication 11, dans lequel le produit programme informatique comprend un support lisible par ordinateur sur lequel les parties de code logiciel sont stockées.

13. Produit programme informatique selon la revendication 11, dans lequel le programme peut être chargé directement dans une mémoire interne du dispositif de traitement.
